**Europäisches Patentamt**

**European Patent Office**

**Office européen des brevets**

(19)

(11) Veröffentlichungsnummer: **0 122 871**
**B1**

(12) **EUROPÄISCHE PATENTSCHRIFT**

(45) Veröffentlichungstag der Patentschrift:
**10.12.86**

(51) Int. Cl.⁴: **A 21 B 3/13**

(21) Anmeldenummer: **84710011.2**

(22) Anmeldetag: **29.03.84**

(54) **Kuchenform.**

(30) Priorität: **09.04.83 DE 3312755**

(43) Veröffentlichungstag der Anmeldung:
**24.10.84 Patentblatt 84/43**

(45) Bekanntmachung des Hinweises auf die Patenterteilung:
**10.12.86 Patentblatt 86/50**

(84) Benannte Vertragsstaaten:
**AT BE CH DE FR GB IT LI LU NL SE**

(56) Entgegenhaltungen:
**CH - A - 227 953**
**DE - C - 557 377**
**GB - A - 2 022 971**

(73) Patentinhaber: **Preston, Elisabeth, Eserwallstrasse 17, D-8900 Augsburg (DE)**

(72) Erfinder: **Preston, Elisabeth, Eserwallstrasse 17, D-8900 Augsburg (DE)**

(74) Vertreter: **Munk, Ludwig, Dipl.-Ing., Patentanwalt Prinzregentenstrasse 1, D-8900 Augsburg (DE)**

## Beschreibung

Die Erfindung betrifft eine Kuchenform zur Aufnahme des Kuchenteigs bzw. der Kuchenmasse in fliessfähigem bzw. leicht sich verflüssigendem Zustand, mit einem umlaufenden, an einem Boden gegen Abheben gesichert lösbar festlegbaren, im Durchmesser veränderbaren Ring, der mit einer Trennfuge versehen ist und dessen Enden lösbar aneinander festlegbar sind.

Die bekannten Backformen dieser Art in Form der sogenannten Springformen bestehen in der Regel vollständig aus Metall und sind daher aufgrund ihrer Konsistenz zum Backen in Mikrowellenherden ungeeignet.

Aus der CH-A 227 953 ist eine Kuchenform eingangs erwähnter Art bekannt, die einen aus Glas bestehenden Boden sowie einen einteiligen, im Durchmesser veränderbaren, aus Metall bestehenden Ring oder einen zweiteiligen, aus Glas bestehenden Ring aufweisen soll. Der Ring besitzt an seinem unteren Rand eine Klaue zur formschlüssigen Aufnahme des Bodens und ist durch eine Spannvorrichtung in zusätzlichen kraftschlüssigen Kontakt mit dem Boden bringbar. Die Spannvorrichtung besteht bei der einteiligen Ringausführung aus einem Kniehebelverschluss, bei der zweiteiligen Ringausführung aus Spanndrahtringen. In jedem Falle sind also Metallteile vorhanden. Auch diese Form ist daher zum Backen in Mikrowellenherden nicht geeignet. Der Glasboden kann zwar als Tortenplatte zum Servieren des in der Form hergestellten Backwerks dienen. Die Handhabung einer derartigen Tortenplatte gestaltet sich jedoch sehr umständlich, da der äussere Rand des Glasbodens mit dem äusseren Rand des Backguts abschliesst.

Es sind zwar auch schon sogenannte Tortenringe bekanntgeworden, die aus einem Kunststoffstreifen mit variabler Überschneidung lösbar aneinander festlegbaren, voneinander abnehmbaren Enden bestehen und die zur Herstellung von auf einen vorgebackenen Tortenboden aufzubringendem Tortenguss bestimmt sind. Diese Tortenringe werden in manchen Haushalten zum Backen in Mikrowellenherden verwendet, wozu sie mit ihrem unteren Rand auf eine ebene Glasplatte gestellt und beschwert werden. Dies ergibt jedoch nicht nur eine umständliche, sondern auch eine höchst unsichere Handhabung einer so hergestellten Backform. Dieselbe Problematik ergibt sich, wenn es darum geht, ohne Verwendung eines vorgebackenen Tortenbodens eine Kaltspeisetorte, z.B. eine bodenlose Eis- oder Puddingtorte herzustellen.

Hiervon ausgehend ist es daher die Aufgabe der vorliegenden Erfindung, unter Vermeidung der Nachteile der bekannten Anordnungen eine Kuchenform eingangs erwähnter Art zu schaffen, die eine einfache und sichere Handhabung gewährleistet und sich gleichzeitig als Mikrowellenherdgeschirr eignet.

Diese Aufgabe wird erfindungsgemäss dadurch gelöst, dass der Ring aus einem Kunststoffstreifen besteht, dessen voneinander abnehmbare Enden mit variabler Überschneidung lösbar aneinander festlegbar sind, und dass der den Ring aufnehmende Boden als ebenfalls aus Kunststoff bestehender Wechselaufsatz ausgebildet ist, der auf einer ebenfalls aus Kunststoff bestehenden Grundplatte lösbar festlegbar ist, deren Durchmesser grösser als der Durchmesser des hierauf jeweils festgelegten Wechselaufsatzes ist.

Diese Massnahmen ergeben in vorteilhafter Weise eine Kuchenform, bei der der umlaufende Ring nach radial aussen freiliegt und vollständig geöffnet werden kann, so dass er zum Entformen des hergestellten Backwerks bzw. der hergestellten Kaltspeisetorte oder dergleichen leicht und einfach nach radial aussen vom Formling abgeschält werden kann. Gleichzeitig ist hierbei sichergestellt, dass eine durch den Rand der Grundplatte gebildete Halteleiste vorhanden ist, an der die Form zur Bewerkstelligung einer Veränderung angefasst werden kann, ohne hierbei den umlaufenden Ring erfassen zu müssen, was sich im Hinblick auf die geringe radiale Eigensteifigkeit des aus Kunststoff bestehenden Rings als besonders vorteilhaft erweist. Trotz der geringen Eigensteifigkeit des Rings in radialer Richtung lassen sich hierbei in vorteilhafter Weise Verformungen des vom Ring umfassten Formlings vermeiden, ohne den Ring an seinen oberen und unteren Kanten umgreifen zu müssen, wodurch sich auch ein aus hygienischen und ästhetischen Gründen unerwünschter Hautkontakt mit dem Formling vermeiden lässt. Die erfindungsgemässen Massnahmen ergeben somit eine einfache und sichere Handhabung. Ein weiterer Vorteil der erfindungsgemässen Massnahmen ist darin zu sehen, dass sich infolge der Ausgestaltung des Bodens als Wechselaufsatz eine hohe Variabilität und damit eine ausgezeichnete Ausnutzung der durch den in seinem Durchmesser verstellbaren Ring gebotenen Möglichkeiten hinsichtlich des jeweils zur Anwendung kommenden Formdurchmessers erreichen lässt. Ausserdem kann es als besonderer Vorteil der erfindungsgemässen Massnahmen gelten, dass die Grundplatte mit aufgesetztem Boden gleichzeitig als Servierplatte dienen kann, wobei nicht nur die durch den über den Boden vorstehenden Rand der Grundplatte gebildete Griffleiste besondere Handhabungsvorteile bietet, sondern infolge der hier gegebenen Erhöhung des auf den Boden aufliegenden Formlings gegenüber der Grundplatte sichergestellt ist, dass vom Formling abgetrennte Stücke leicht und einfach auf einer Tortenschaufel aufgenommen werden können. Der Aufbau der erfindungsgemässen Form aus lösbar aneinander festlegbaren Kunststoffformlingen ermöglicht zudem eine einfache Reinigung sämtlicher Formteile. Ausserdem ergeben sich hier eine ausgezeichnete Hitze-, Kälte- und Korrosionsbeständigkeit sowie Geruchs- und Geschmacksneutralität. Der Aufbau der erfindungsgemässen Form aus aneinander festlegbaren Kunststoffformlingen gestattet in vorteilhafter Weise aber auch die Verwendung dieser Form als Mikrowellenherdgeschirr. Ein weiterer Vorteil der erfindungsgemässen Massnahmen ist darin zu sehen, dass als umlaufender Ring einfach der in vielen Haushalten ohnehin bereits vorhandene Tortenring bzw. umgekehrt der umlaufende Ring als Tortenring zur Herstellung von Tortenguss Verwendung finden kann, was sich vorteilhaft auf die Wirtschaftlichkeit auswirkt.

In vorteilhafter Ausgestaltung der übergeordneten Massnahmen kann der Grundplatte ein Satz von mindestens zwei, vorzugsweise drei als Wechselaufsätze ausgebildeten Böden zugeordnet sein, die unterschiedlichen Durchmesser und/oder unterschiedliche Form aufweisen können. Diese Massnahmen ermöglichen die Herstellung von Backwerk unterschiedlicher Form und unterschiedlicher Grösse und ermöglichen somit eine vielseitige Verwendbarkeit.

Zweckmässig kann dabei der Durchmesser der Grundplatte grösser als der Durchmesser des den grössten Durchmesser aufweisenden Wechselaufsatzes sein. Hierdurch ist sichergestellt, dass der äussere Rand der Grundplatte in jedem Fall als Griffleiste zur Verfügung steht. Zweckmässig kann die Grundplatte dabei mit einem innerhalb der Griffleiste angeordneten Fuss versehen sein, was die Griffigkeit der Griffleiste erhöht.

Eine weitere zweckmässige Massnahme kann darin bestehen, dass die Wechselaufsätze mittels eines vorzugsweise als Bajonettverschluss ausgebildeten Schnellverschlusses an der Grundplatte festlegbar sind. Diese Massnahmen ermöglichen eine einfache und schnelle Betätigung des Verschlusses und ergeben eine zuverlässige Ver- und Entriegelung der aneinander festzulegenden Teile.

Eine weitere vorteilhafte Massnahme kann darin bestehen, dass der Ring mit einem umlaufenden, nach radial aussen wegstehenden Aufsetzflansch versehen ist, dem bodenseitig jeweils eine umlaufende Randstufe zugeordnet ist. Diese Massnahmen gewährleisten eine zuverlässige Zentrierung und einen zuverlässigen Sitz des auf einen Boden aufsetzbaren Rings. Zweckmässig kann der Ring dabei eine an seinen Aufsetzflansch angeformte, den bodenseitigen Rand umfassende Randklaue aufweisen.

Eine weitere zweckmässige Massnahme kann darin bestehen, dass der Ring durch lösbar anbringbare Spannelemente gegen Abheben gesichert ist. Hierdurch wird die Bedienungsfreundlichkeit erhöht.

In weiterer Fortbildung der übergeordneten Massnahmen kann dabei dem Aufsetzflansch ein umlaufender Dichtstreifen zugeordnet sein. Dieser Dichtstreifen erhöht insbesondere unter der Wirkung der Spannelemente die Abdichtung des Formhohlraums, so dass in vorteilhafter Weise auch sehr dünnflüssige Masse verarbeitbar ist.

Weitere zweckmässige Fortbildungen und vorteilhafte Ausgestaltungen der übergeordneten Massnahmen ergeben sich aus der nachstehenden Beschreibung eines Ausführungsbeispiels anhand der Zeichnung in Verbindung mit den restlichen Unteransprüchen. In der Zeichnung zeigen:

Fig. 1 einen Bausatz zur Erstellung einer erfindungsgemässen Backform mit mehreren Wechselaufsätzen und

Fig. 2 einen Radialschnitt durch eine erfindungsgemässe Backform.

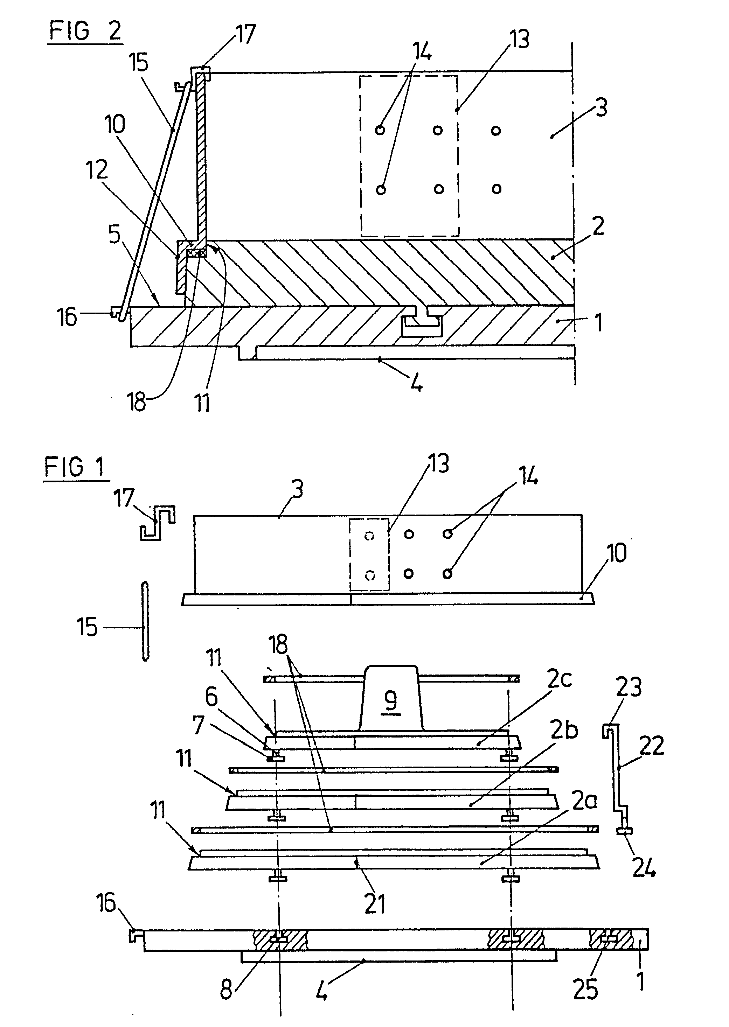

Der in Fig. 1 dargestellte Backformsatz besteht aus einer Grundplatte 1, einem Satz von mindestens zwei, hier drei, verschiedenen, an der Grundplatte 1 festlegbaren Wechselaufsätzen 2a, 2b, 2c sowie einem umlaufenden, im Durchmesser veränderbaren Ring 3, der auf einen zugeordneten Boden in Form des jeweils an der Grundplatte 1 befestigten Wechselaufsatzes 2a bzw. 2b bzw. 2c aufsetzbar ist. Der Ring 3, die Wechselaufsätze 2a bis 2c und die Grundplatte 1 sind als aus einem lebensmittelechten Kunststoff bestehende Kunststoffformlinge ausgebildet. Zweckmässig kann dabei für sämtliche Teile dasselbe Material Verwendung finden.

Die Grundplatte 1 ist, wie Fig. 2 am besten zeigt, als mit einem durch eine umlaufende Leiste gebildeten Fuss 4 versehene, scheibenförmige Platte ausgebildet, die einfach als Spritzgussformling hergestellt werden kann. Dasselbe gilt für die Wechselaufsätze 2a bis 2c. Der Durchmesser der Wechselaufsätze 2a bis 2c ist gestaffelt. Der Durchmesser der Grundplatte 1 ist grösser als der Durchmesser des den grössten Durchmesser aufweisenden Wechselaufsatzes, hier des Wechselaufsatzes 2a, so dass der den jeweils aufgesetzten Wechselaufsatz überragende Randbereich der Grundplatte 1 eine Griffleiste 5 bildet. Zweckmässig ist die den Fuss 4 bildende Leiste gegenüber der Griffleiste 5 nach innen versetzt, so dass die Griffleiste einfach erfasst werden kann. Die Wechselaufsätze 2a bis 2c sind mittels eines Schnellverschlusses an der Grundplatte 1 festlegbar. Dieser kann als Schraubverschluss ausgebildet sein. Im dargestellten Ausführungsbeispiel ist hierzu ein aus an jeweils einem Hals 6 gehaltenen, hinterschnittenen Rastköpfen 7 und aus diesen zugeordneten Rastnuten 8 bestehender Bajonettverschluss vorgesehen. Die Rastnuten 8 sind hier in die Grundplatte 1 eingeformt. Die Wechselaufsätze 2a bis 2c sind jeweils mit nach unten vorstehenden, auf jeweils einem Hals 6 befestigten Rastköpfen 7 versehen. Die Rastköpfe 7 und die Rastnuten 8 sind hier auf demselben Teilkreis angeordnet, so dass im Bereich der Grundplatte 1 lediglich ein Rastnutensatz benötigt wird, der zum Eingriff mit den Rastköpfen sämtlicher Wechselaufsätze 2a bis 2c bringbar ist. Die Rastnuten 8 und die Rastköpfe 7 sind gleichmässig am Umfang des Teilkreises verteilt. Eine 120°-Teilung ergibt einen zuverlässigen Halt. Die Wechselaufsätze 2a bis 2c können nicht nur unterschiedlichen Durchmesser, sondern unterschiedliche Form aufweisen. Im dargestellten Ausführungsbeispiel ist der in Fig. 1 oben gezeichnete Wechselaufsatz 2c beispielsweise mit einem mittigen Zapfen 9 versehen, was die Herstellung ringförmigen Backwerks usw. ermöglicht. Es wäre auch denkbar, die formraumseitige Oberfläche der Wechselaufsätze 2a bis 2c mit einer Kontur zu versehen, etwa mit einem umlaufenden, nach unten gewölbten Kanal oder dergleichen.

Der Ring 3 ist im Bereich seines unteren Rands mit einem nach radial aussen wegstehenden Aufsetzflansch 10 versehen, der wie am besten aus Fig. 2 erkennbar ist, eine gegenüber der Wandstärke des den Ring 3 bildenden bandförmigen Materials eine vergleichsweise breite Aufsitzfläche ergibt. Die Wechselaufsätze 2a bis 2c sind mit jeweils einer dem Aufsetzflansch 10 zugeordneten Randstufe 11 versehen, in die der Aufsetzflansch 10 in der der Fig. 2 zugrundeliegenden Montagestellung eingreift, was eine ausgezeichnete Fixierung und zuverlässigen Sitz des Rings 3 ergibt. Im dargestellten Ausführungsbeispiel ist an den Aufsetzflansch 10 eine Randklaue 12 angeformt, die, wie am besten aus Fig. 2 erkennbar ist, den äusseren Umfang des jeweiligen Wechselaufsatzes 2 umfasst. Im dargestellten Ausführungsbeispiel ist die Höhe der Randklaue 12 kleiner als die Dicke der Wechselaufsätze 2a, b,c. Es wäre aber auch denkbar, im Bereich der Grundplatte 1 die jeweiligen Wechselaufsätze umfassende Ringnuten vorzusehen, in welche die Randklaue 12 bei aufgesetztem Ring eingreifen kann, was in manchen Fällen zur Sicherung des gebogenen Rings 3 gegen Aufspringen erwünscht sein kann.

Der Durchmesser des Rings 3 ist zur Anpassung an den jeweils zum Einsatz kommenden Wechselaufsatz 2a bzw. 2b bzw. 2c verstellbar. Die hierbei einander mehr oder weniger überlappenden Enden des Rings 3 sind mittels eines Verschlusses aneinander festlegbar. Im dargestellten Beispiel ist der Ring 3 hierzu im Bereich seines einen Endes mit einem zwei stiftartige Rastvorsprünge aufnehmenden Scharnierflügel 13 und im Bereich seines anderen Endes mit einem Satz von hier durch Bohrungen gebildeten, den Rastvorsprüngen des Scharnierflügels 13 zugeordneten Rastausnehmungen 14 versehen, in welche die Rastvorsprünge wahlweise eindrückbar sind. Zum Entformen des hergestellten Backwerks wird der Ring 3 durch Betätigung des Scharnierflügels 13 geöffnet, womit der nach radial aussen völlig freie Ring 3 einfach vom Backwerk gelöst werden kann. Anstelle des Scharnierflügels 13 könnten auch im Bereich des Aufsetzflansches 10 Rastvorsprünge und diesen zugeordnete Rastausnehmungen vorgesehen sein. In manchen Fällen kann es sich dabei als zweckmässig erweisen, im Bereich der einander übergreifenden Ringenden zusätzliche Klauen vorzusehen, die im Bereich des einen Ringendes am oberen Ringrand vorgesehen sind und in die der Ring mit seinem anderen Ende einführbar ist. Aufgrund der Überlappung der Ringenden ergibt sich im Bereich des Ringumfangs eine der Materialstärke entsprechende Stufe. Zur Bewerkstelligung einer satten Anlage des Rings 3 an den Wechselaufsätzen 2a, b, c können diese mit einer entsprechenden Gegenstufe der in Fig. 1 bei 21 angedeuteten Art versehen sein.

Der Ring 3 kann, wie in Fig. 1 rechts angedeutet ist, durch Spannelemente bildende Halter 22 gegen Abheben vom jeweiligen Wechselaufsatz gesichert sein. Die Halter 22 besitzen eine am oberen Rand des Rings 3 einhängbare Klaue 23 und sind an ihrem unteren Ende mit einem Rastkopf 24 versehen, der in eine jeweils zugeordnete, auf den einzelnen Wechselaufsätzen zugeordneten Teilkreisen angeordnete Rastausnehmungen 25 der Grundplatte 1 bajonettverschlussartig einrastbar ist. Die Halter 22 werden durch dem Ringquerschnitt konturmässig angepasste, streifenförmige Plastiklaschen gebildet. Der Ring 3 kann aber auch, wie Fig. 1 links und Fig. 2 weiter erkennen lassen, durch lösbar anbringbare Gummizüge 15 gegen Abheben vom jeweils zugeordneten Wechselaufsatz 2 gesichert sein. Die Gummizüge 15 können an am Rand der Grundplatte 1 vorgesehenen Einhängkrallen 16 und an am oberen Rand des Rings 3 einhängbaren Doppelhaken 17 einhängbar sein. Die Einhängskrallen 16 können an die Grundplatte 1 angeformt und gleichmässig, hier wie die Rastausnehmungen 24 mit einer Teilung um 120°, am Umfang verteilt sein. Ein Bausatz umfasst dementsprechend drei Züge 15 und drei S-förmige Doppelhaken 17, die an jeder beliebigen Stelle des oberen Rands des Rings 3 einhängbar sind. Die Züge 15 bestehen aus einem unter Spannung dehnbaren Material, wie Gummi oder dergleichen. Die Doppelhaken 17 sind als zweckmässig aus demselben Material wie der Ring 3 und die übrigen Kunststoffteile bestehende Kunststofformlinge ausgebildet.

Im dargestellten Ausführungsbeispiel ist, wie Fig. 2 weiter erkennen lässt, im Bereich der dem Aufsetzflansch 10 des Rings jeweils zugeordneten bodenseitigen Randstufe 11 ein umlaufender Dichtstreifen 18 vorgesehen. Der Dichtstreifen 18 kann an den Aufsetzflansch 10 oder vorzugsweise an die Randstufe 11 angesetzt bzw. angeformt sein. Im dargestellten Ausführungsbeispiel sind lose einlegbare Dichtstreifen 18 vorgesehen. Der Bausatz gemäss Fig. 1 umfasst demnach drei den drei Wechselaufsatzdurchmessern jeweils zugeordnete, ringförmige Dichtstreifen 18. Die Dichtstreifen 18 bestehen zweckmässig aus Weichgummi oder dergleichen. Sofern die Dichtstreifen 18 eine ausreichende Dicke und Nachgiebigkeit besitzen kann sich die Gegenstufe 21 als entbehrlich erweisen.

Gemäss einer besonders vorteilhaften Ausführung können die Dichtstreifen 18 aus Saugringen gebildet sein, mittels derer der Ring 3 am jeweils zugeordneten Boden kraftschlüssig festlegbar ist. In Fällen dieser Art können separate Spanner und dergleichen entfallen.

## Patentansprüche

1. Kuchenform zur Aufnahme des Kuchenteigs bzw. der Kuchenmasse in fliessfähigem bzw. leicht sich verflüssigendem Zustand, mit einem umlaufenden, an einem Boden gegen Abheben gesichert lösbar festlegbaren, im Durchmesser veränderbaren Ring (3), der mit einer Trennfuge versehen ist, und dessen Enden lösbar aneinander festlegbar sind, dadurch gekennzeichnet, dass der Ring (3) aus einem Kunststoffstreifen besteht, dessen voneinander abnehmbare Enden mit variabler Überschneidung lösbar aneinander festlegbar sind, und dass der den Ring (3) aufnehmende Boden als ebenfalls aus Kunststoff bestehender Wechselaufsatz (2a bzw. 2b bzw. 2c) ausgebildet ist, der auf einer ebenfalls aus Kunststoff bestehenden Grundplatte (1) lösbar festlegbar ist, deren Durchmesser grösser als der Durchmesser des hierauf jeweils festgelegten Wechselaufsatzes (2a bzw. 2b bzw. 2c) ist.

2. Kuchenform nach Anspruch 1, dadurch gekennzeichnet, dass der Grundplatte (1) ein Satz von mindestens zwei, vorzugsweise drei als Wechselaufsätze (2a bzw. 2b bzw. 2c) ausgebildeten Böden zugeordnet ist, die unterschiedlichen Durchmesser und/oder unterschiedliche Form aufweisen.

3. Kuchenform nach einem der vorhergehenden Ansprüche, dadurch gekennzeichnet, dass die Wechselaufsätze (2a bzw. 2b bzw. 2c) mittels eines vorzugsweise als Bajonettverschluss ausgebildeten Schnellverschlusses an der Grundplatte (1) festlegbar sind, wobei die Wechselaufsätze (2a, 2b, 2c) mit vorzugsweise auf demselben Teilkreis angeordneten Rastköpfen (7) versehen sind, denen im Bereich der Grundplatte (1) vorgesehene Rastnuten (8) zugeordnet sind.

4. Kuchenform nach einem der vorhergehenden Ansprüche, dadurch gekennzeichnet, dass die Grundplatte (1) einen gegenüber ihrem äusseren, eine Griffleiste (5) bildenden Rand nach innen versetzten Fuss (4) aufweist.

5. Kuchenform nach einem der vorhergehenden Ansprüche, dadurch gekennzeichnet, dass die Grundplatte (1) sowie die dieser zugeordneten Wechselaufsätze (2a bzw. 2b bzw. 2c) aus demselben Material wie der Ring (3) bestehen.

6. Kuchenform nach einem der vorhergehenden Ansprüche, dadurch gekennzeichnet, dass der Ring (3) mit einem umlaufenden, nach radial aussen wegstehenden Aufsetzflansch (10) versehen ist, dem bodenseitig jeweils eine umlaufende Randstufe (11) zugeordnet ist und der vorzugsweise eine angeformte, den bodenseitigen Rand umfassende Randklaue (12) aufweist.

7. Kuchenform nach einem der vorhergehenden Ansprüche, dadurch gekennzeichnet, dass der Ring (3) durch lösbar anbringbare Spannelemente (Züge 15, Halter 22) gegen Abheben sicherbar ist, die entweder als an der Grundplatte (1) und vorzugsweise am oberen Rand des Rings (3) festlegbare, vorzugsweise aus Gummi bzw. gummiartigem Material bestehende Züge (15) oder als am Ring (3) einhängbare, wechselaufsatzseitig einrastbare, durch Plastikflaschen gebildete Halter (22) ausgebildet sind.

8. Kuchenform nach einem der vorhergehenden Ansprüche, dadurch gekennzeichnet, dass dem Aufsetzflansch (10) des Rings (3) jeweils ein umlaufender, vorzugsweise wechselseitig vorgesehener Dichtstreifen (18) zugeordnet ist, der vorzugsweise als Saugring ausgebildet ist.

9. Kuchenform nach einem der vorhergehenden Ansprüche, dadurch gekennzeichnet, dass der Ring (3) im Bereich seines einen Endes mit mindestens einem Rastvorsprung und im Bereich seines anderen Endes mit einem Satz von jedem Rastvorsprung zugeordneten Rastausnehmungen (14) versehen ist, in welche der jeweils zugeordnete Rastvorsprung wahlweise einrastbar ist.

10. Kuchenform nach einem der vorhergehenden Ansprüche, dadurch gekennzeichnet, dass die Wechselaufsätze (2a, 2b, 2c) jeweils eine der durch die einander überlappenden Enden des Rings (3) gebildeten Stufe zugeordnete Gegenstufe (21) aufweisen.

## Claims

1. A cake tin for receiving the cake mixture or dough respectively in a fluid or respectively easily pourabe state with a surrounding ring (3) which, secured against coming off, can be releasably fixed to a bottom, and the diameter of which can be modified, this ring (3) having a separating line and its ends being able to be releasably fixed to each other, characterized in that the ring (3) consists of a plastic strip of which the ends detachable from each other can be releasably fixed to each other with an adjustable overlap, and that the bottom accomodating the ring (3) is in the form of an interchangeable attachment (2a or 2b or 2c respectively) also made of plastic which can be releasably fixed to a base plate (1) also made of plastic of which the diameter is greater than the diameter of the respective interchangeable attachment (2a or 2b or 2c respectively) fixed to it.

2. A cake tin als claimed in claim 1 characterized in that the base plate (1) cooperates with a set of at least two, preferably three bottoms which are in the form of interchangeable attachments (2a or 2b or 2c respectively), and are of different diameter and/or shape.

3. A cake tin as claimed in any one of the preceding claims characterized in that the interchangeable attachments (2a or 2b or 2c respectively) can be fixed to the base plate (1) by means of a snap closure preferably in the form of a bayonet catch, and have nobs (7) which are preferably located on the same graduated circle and cooperate with hollows (8) provided in the base plate (1).

4. A cake tin as claimed in any one of the preceding claims characterized in that the base plate (1) has a foot staggered inwardly in relation to the outer edge of the said base plate (1) forming a lifting ridge (5).

5. A cake tin as claimed in any one of the preceding claims characterized in that the base plate (1) as well as the interchangeable attachments (2a or 2b or 2c respectively) cooperating with it are made of the same material as the ring (3).

6. A cake tin as claimed in any one of the preceding claims characterized in that the ring (3) has a surrounding flange (1) which projects radially outwards, cooperates at the bottom with a respective surrounding lateral step (11), and preferably has a lateral claw (12) molded onto and embracing the edge of the bottom.

7. A cake tin as claimed in any one of the preceding claims characterized in that the ring (3) can be secured against coming off by means of releasably attachable gripping elements (bands 15, holders 22) either in the form of bands (15) which can be fixed to the base plate (1) and preferably to the upper edge of the ring (3) and are preferably made of rubber or rubber-like material respectively, or in the form of holders (22) which can be hooked onto the ring (3) and locked with the interchangeable attachment (2a or 2b or 2c respectively), and which are formed by plastic clips.

8. A cake tin as claimed in any one of the preceding claims characterized in that the flange (10) of the ring (3) cooperates with a respective surrounding sealing strip (18) which is preferably interchangeable and in the form of a suction ring.

9. A cake tin as claimed in any one of the preceding claims characterized in that the ring (3), at one of its ends, has at least one projection and at its other end, a set of recesses (14) which cooperate with each projection and with which the cooperating projection can engage alternatively.

10. A cake tin as claimed in any one of the preceding claims characterized in that the interchangeable attachments (2a or 2b or 2c respectively) have each a counter step (21) which cooperates with the step formed by the overlapping ends of the ring (3).

## Revendications

1. Moule à gâteau pour recevoir respectivement la coulée et la pâte à gâteau dans un état respectivement coulant et facile à verser, avec un anneau (3) ceignant qui, protégé de se détacher, peut être attaché amoviblement à un fond et dont le diamètre peut être changé, ledit anneau (3) comportant un joint à division et des bouts attachés l'un à l'autre amoviblement, caractérisé en ce que l'anneau (3) se compose d'une bande en matière plastique dont les bouts qui peuvent être détachés l'un de l'autre sont attachés l'un à l'autre amoviblement et avec un chevauchement variable, et en ce que le fond recevant l'anneau (3) est sous forme d'un élément interchangeable (respectivement 2a et 2b et 2c) également en matière plastique, qui peut être attaché amoviblement à une plaque de base (1) dont le diamètre est plus grand que celui de l'élément interchangeable respectif (respectivement 2a et 2b et 2c) y attaché.

2. Moule à gâteau tel que revendiqué en 1 caractérisé en ce que la plaque de base (1) collabore avec un jeu d'au moins deux, de préférence trois fonds sous forme d'éléments interchangeables (respectivement 2a et 2b et 2c) de diamètre et/ou forme différents.

3. Moule à gâteau tel que revendiqué dans l'une quelconque des revendications précédentes caractérisé en ce que les éléments interchangeables (respectivement 2a et 2b et 2c) peuvent être attachés à la plaque de base (1) au moyen d'une fermeture rapide de préférence sous forme de fermeture a baïonnette, lesdits éléments interchangeables (respectivement 2a et 2b et 2c) comportant des caboches (7) se situant de préférence sur le même cercle gradué et collaborant avec des creux (8) dans la plaque de base (1).

4. Moule à gâteau tel que revendiqué dans l'une quelconque des revendications précédentes caractérisé en ce que la plaque de base (1) comporte un socle (4) qui est espacé vers l'intérieur en relation avec le bord extérieur de ladite plaque de base (1) formant une arête (5) de levage.

5. Moule à gâteau tel que revendiqué dans l'une quelconque des revendications précédentes caractérisé en ce que la plaque de base (1) ainsi que les éléments interchangeables (respectivement 2a et 2b et 2c) collaborant avec elle sont faits de la même matière que l'anneau (3).

6. Moule à gâteau tel que revendiqué dans l'une quelconque des revendications précédentes caractérisé en ce que l'anneau (3) est muni d'une bride (10) ceignante qui saillit radialement vers l'extérieur, collabore au fond avec un gradin latéral (11) ceignant, et comporte de préférence une griffe latérale (12) intégrée cerclant le bord du fond.

7. Moule à gâteau tel que revendiqué dans l'une quelconque des revendications précédentes caractérisé en ce que l'anneau (3) peut être protégé de se détacher au moyen d'éléments des serrage (bandes 15, dispositifs d'attache 22) amovibles et sous forme ou de bandes 15 qui peuvent être attachées à la plaque de base (1) et de préférence au bord supérieur de l'anneau (3) et sont de préférence faites respectivement de caoutchouc et de matière caoutchouteuse, ou de dispositifs d'attache (22) qui peuvent s'accrocher à l'anneau (3), s'engager avec l'élément interchangeable (respectivement 2a et 2b et 2c) et sont formés par de joints en plastique.

8. Moule à gâteau tel que revendiqué dans l'une quelconque des revendications précédentes caractérisé en ce que la bride (10) de l'anneau (3) collabore avec une bande de garniture (18) ceignante respective qui est de préférence interchangeable et sous forme d'un anneau de succion.

9. Moule à gâteau tel que revendiqué dans l'une quelconque des revendications précédentes caractérisé en ce que l'anneau (3) comporte, à un de ses bouts, au moins une saillie et à l'autre bout un jeu de renfoncements (14) qui collaborent avec la saillie respective et avec lesquels peut s'engager la saillie collaborante.

10. Moule à gâteau tel que revendiqué dans l'une quelconque des revendications précédentes caractérisé en ce que les éléments interchangeables (respectivement 2a et 2b et 2c) comportent chacun un contre-gradin (21) qui collabore avec le gradin formé par les bouts chevauchants de l'anneau (3).

FIG 2

FIG 1